# EUROPÄISCHE PATENTANMELDUNG

(11) **EP 2 282 498 A1**
(43) Veröffentlichungstag der Anmeldung: **09.02.2011**
(21) Anmeldenummer: 10006657.0
(22) Anmeldetag: 27.06.2010
(51) Int. Cl.: H04M 3/22, H04M 3/20, G10L 17/00

(54) **Verifizierung von Teilnehmern eines Telefongesprächs mittels zuvor erfassten Stimmkonservern**

(30) Priorität: 31.07.2009 DE 202009010358 U; 11.08.2009 DE 202009010817 U; 28.01.2010 DE 202010001984 U
(71) Anmelder: Telio AG, 22765 Hamburg (DE); Schwembauer, Thomas, 84489 Burghausen (DE)
(72) Erfinder: Schwembauer, Thomas, 84489 Burghausen (DE); Fuchs, Heiko, 22765 Hamburg (DE)

(57) **Zusammenfassung**

In einer Justizvollzugsanstalt kann der Kommunikationsverkehr durch das Aufsichtspersonal für jeden einzelnen Insassen reglementiert werden müssen. Bisherige Lösungen dieser Problemstellung beschränken sich auf die Identifizierung des Insassen bzw. Anrufenden (A-Teilnehmer), um anhand dieser Identifizierung Rufnummern aus Listen mit zugelassenen bzw. gesperrten Rufnummern der Angerufenen (B-Teilnehmer) auszuwählen. Auch gibt es Lösungen, welche vorschlagen, eine Stimmkonserve zu erstellen und beim Verbindungsaufbau die aktuelle Teilnehmerstimme mit der Stimmkonserve zu vergleichen, um aufgrund dieses Ergebnisses einen Verbindungsaufbau überhaupt erst zu ermöglichen. Ein Nachteil dieser Lösungen ist ihre Leitungszentriertheit. Ist diese Authentifizierung einmal durchlaufen und die Verbindung einmal hergestellt, dann kann diese Verbindung in nicht erlaubter Weise dennoch genutzt werden. So kann auf der Seite des A-Teilnehmers nach der Authentifizierung beispielsweise der Hörer weitergegeben werden, um so zu einer Identität zu gelangen die weniger oder anderen Beschränkungen unterliegt. Ein weiterer Nachteil der bisher vorgeschlagenen Lösungen besteht darin, dass eine Weitervermittlung nicht sicher erfasst werden kann. Dies wird beispielsweise in Justizvollzugsanstalten dadurch gelöst, dass alle Gespräche durch Dritte überwacht (z.B. mitgehört) werden müssen. Dies ist aber mit hohem zeitlichem und personellem Aufwand verbunden oder sogar durch datenschutzrechtliche Bestimmungen untersagt.
Es ist daher eine Aufgabe der Erfindung, ein Verfahren und eine Vorrichtung zur Teilnehmeridentifizierung und -verifizierung anzugeben, welche die genannten Nachteile vermeidet. Die Aufgabe wird dadurch gelöst, dass während einer Mithörphase Stimmkonserven des Anrufenden und/oder Angerufenen genommen werden und in einer Datenbank abgelegt werden. Nach dieser Hinterlegung kann dann die Verifizierung entweder so erfolgen, dass im Fall, dass die Gesprächsteilnehmer permanent auf Übereinstimmung geprüft werden. Alternativ kann eine anlassbezogene Prüfung erfolgen, z.B. auf Betreiben eines Wächters im Verdachtsfall, oder regelmäßig nach Verstreichen von einer voreingestellten Zeitdauer, oder nach willkürlichen durch die EDV selbst festgelegten Zeitpunkten. Allen ist gemeinsam, dass hierdurch die Übertragungsresourcen geschont werden.

## Beschreibung

Die vorliegende Erfindung betrifft eine Vorrichtung und ein Verfahren zur Sicherstellung von Gesprächspartnern in Telekommunikationsnetzen.

In modernen Kommunikationsnetzen bestehen vielfältige Möglichkeiten Sprachverbindungen herzustellen. Dies kann einerseits über leitungsvermittelte Verbindungen (d.h. Festnetz, Mobilfunk), oder, aufgrund der Zunahme von Breitbandanschlüssen, über paketvermittelte Verbindungen (z.B. Voice-over-IP (VoIP)) geschehen.

Aufgrund der verschiedensten Routingverfahren oder Protokolle ist eine effiziente Überwachung bzw. Aufzeichnung des Kommunikationsverkehrs kaum möglich.

Dies gilt insbesondere für den Kommunikationsverkehr durch Kommunikationsteilnehmer, die nur mit einem begrenzten Personenkreis kommunizieren dürfen, z. B. Insassen einer Justizvollzugsanstalt. In einer Justizvollzugsanstalt kann der Kommunikationsverkehr durch das Aufsichtspersonal für jeden einzelnen Insassen reglementiert werden müssen, um z. B. Anrufe der Insassen bei Tatopfern oder Komplizen zu unterbinden, oder um erzieherische Maßnahmen durchzusetzen.

Bisherige Lösungen dieser Problemstellung beschränken sich auf die Identifizierung des Insassen bzw. Anrufenden (A-Teilnehmer), um anhand dieser Identifizierung Rufnummern aus Listen mit zugelassenen bzw. gesperrten Rufnummern der Angerufenen (B-Teilnehmer) auszuwählen. Auch gibt es Lösungen, welche vorschlagen, eine Stimmkonserve zu erstellen und beim Verbindungsaufbau die aktuelle Teilnehmerstimme mit der Stimmkonserve zu vergleichen, um aufgrund dieses Ergebnisses einen Verbindungsaufbau überhaupt erst zu ermöglichen.

Ein Nachteil dieser Lösungen ist ihre Leitungszentriertheit. Ist diese Authentifizierung einmal durchlaufen und die Verbindung einmal hergestellt, dann kann diese Verbindung in nicht erlaubter Weise dennoch genutzt werden. So kann auf der Seite des A-Teilnehmers nach der Authentifizierung beispielsweise der Hörer weitergegeben werden, um so zu einer Identität zu gelangen die weniger oder anderen Beschränkungen unterliegt. Ein weiterer Nachteil der bisher vorgeschlagenen Lösungen besteht darin, dass eine Weitervermittlung zu einem öffentlichen Apparat, Mobilfunktelefon oder einen VoIP-Anschluss nicht sicher erfasst werden kann. Dies wird beispielsweise in Justizvollzugsanstalten dadurch gelöst, dass alle Gespräche durch Dritte überwacht (z.B. mitgehört) werden müssen. Dies ist aber mit hohem zeitlichem und personellem Aufwand verbunden oder sogar durch datenschutzrechtliche Bestimmungen untersagt.

Es ist daher eine Aufgabe der Erfindung, ein Verfahren und eine Vorrichtung zur Teilnehmeridentifizierung und -verifizierung anzugeben, welche die genannten Nachteile vermeidet.

Diese Aufgabe wird durch eine Vorrichtung und ein Verfahren zur Sicherstellung von Gesprächspartnern in Telekommunikationsnetzen gemäß der unabhängigen Ansprüche gelöst. Die abhängigen Ansprüche zeigen bevorzugte Ausführungsformen.

Die Aufgabe wird insbesondere gelöst durch ein System zur Teilnehmerverifizierung in einem Kommunikationsnetz umfassend: Mittel zum Identifizieren eines ersten Teilnehmers, Mittel zum Erfassen und / oder Speichern von mindestens einer Stimmprobe des ersten Teilnehmers, Mittel zum Erzeugen mindestens eines ersten Sprachmusters des ersten Teilnehmers, Mittel zum Erfassen und / oder Speichern von mindestens einer Stimmprobe mindestens eines weiteren Teilnehmers, Mittel zum Erzeugen mindestens eines ersten Sprachmusters von einem jeden weiteren Teilnehmer, Mittel zum Verifizieren von mindestens einer der Stimmproben durch Vergleichen der erfassten und / oder gespeicherten Stimmproben mit mindestens einem Sprachmuster, wobei all diese Mittel derart zusammenwirken, dass das Kommunikationsnetz mindestens einem der Teilnehmer lediglich dann eine Kommunikationsverbindung bereitstellt, wenn dieser verifiziert ist.

Eine derartige Verifizierung kann insbesondere durch die Hinterlegung einer Stimmkonserve z.B. in einer Datenbank erreicht werden. In einer Sicherheitsumgebung, wie z.B. in Gefängnissen ist insbesondere eine derartige Verifizierung von anzurufenden Personen, also B-Teilnehmern vorgesehen. Auch für den Fall, daß z.B. aus einer Haftanstalt heraus ein Gefangener erlaubterweise zuhause anruft, so muß hierbei sichergestellt sein, daß die angerufene Person nicht nur die ersten Minuten des Gesprächs bestreitet, z.B. um den mithörenden Wachmann zu täuschen, sondern, daß die angerufene Person auch dauerhaft am Telephon bleibt. Derartige Funktionen, daß die Verifikation einer sich außerhalb des Sicherheitsbereichs angerufenen Person innerhalb des sich im Sicherheitsbereichs befindlichen Anrufers befindet, sind von Verifikationen zu unterscheiden, daß ein zu überprüfender Anrufer in einen Sicherheitsbereich hineintelephoniert. Diese Verifikation einer Person welche sich außerhalb eines Sicherheitsbereichs befindet, muß daher im vorliegenden Fall innerhalb dieses Sicherheitsbereichs erfolgen.

Hierfür können erfindungsgemäß während der Mithörphase vom Wachpersonal Stimmkonserven des Angerufenen genommen werden, die dann z.B. bei einen vorzunehmenden Besuch daraufhin überprüft werden, ob die zur Telephonie freigegebene Person auch der Inhaber der betreffenden Stimme ist. Dies erfolgt idealerweise während eines Gesprächs, ohne daß der Betreffende hiervon etwas merkt, um eine Stimmverfälschung, wie sie z.B. in Streßsituationen vorkommt, zu vermeiden. In diesem Punkt grenzt sich eine Einsatzmöglichkeit von anderen Lösungen schon dadurch ab, daß diese Funktion z.B. in Deutschland juristisch nur in Sondersituationen, wie z.B. bei einem Gefangenen erlaubt ist.

Nach einer derartigen Prüfung kann die betreffende Stimmkonserve als geprüft und für vertrauenswürdig befunden in eine Datenbank abgelegt werden. Nach dieser Hinterlegung kann dann die Verifizierung entweder so erfolgen, daß im Fall, daß ein A-Teilnehmer einen B-Teilnehmer außerhalb der Sicherheitsumgebung anruft, permanent auf Übereinstimmung geprüft wird. Alternativ kann eine anlaßbezogne Prüfung erfolgen, z.B. auf Betreiben eines Wächters im Verdachtsfall, oder regelmäßig nach Verstreichen von einer voreingestellten Zeitdauer, oder nach willkürlichen durch die EDV selbst festgelegten Zeitpunkten. Allen ist gemeinsam, daß hierdurch die Übertragungsresourcen geschont werden.

Die Überprüfung des Übereinstimmens der Stimmkonserve der außerhalb des Sicherheitsbereichs befindlichen Person stellt sicher, daß ein sich innerhalb des Sicherheitsbereichs befindliches Überprüfungssystem, Personen dann auf ihre Authentizität hin überprüfen kann, wenn diese sich außerhalb es Sicherheitsbereichs befindet und zwar unabhängig davon, wer wen anruft.

Auf diese Weise kann sichergestellt werden, daß der außerhalb eines Sicherheitsbereichs anzurufende nicht den Apparat weitergibt, oder eine Rufumleitung nutzt. Selbst der Fall, daß sich ein Gewalttäter der Stimme eines anzurufenden bedient, indem er diesem beispielsweise souffliert, kann durch das Zwischenschalten entsprechender Algorithmen, wie sie beispielsweise bei Lügendetektoren Verwendung finden unterbunden werden. In derartigen Streßsituationen verändert sich die Stimme eines unter Druck gesetzten und würde bei einer entsprechend fein eingestellten Diagnose ein Warnsignal ausgeben. Derartige Algorithmen sind auch sprachenunabhängig, sodaß der Betreffende ruhig in eine andere Sprache wechseln kann. Durch eine Zentrierung der Algorithmen auf den Streßfaktor wird damit auch eine Entlastung von Übersetzungskapazitäten bewirkt.

Eine alternative Ausgestaltungsform sieht vor, daß im Falle daß erkannt wurde, daß die Ist-Stimme nicht in Einklang mit der Stimmkonserve steht, an eine dritte Person ein Warnsignal ausgibt. Dies kann geschehen, ohne daß die beiden Gesprächspartner dies bemerken würden, um beispielsweise der Polizei einen Zugriff auf einen Komplizen zu ermöglichen. Alternativ kann das Wachpersonal insbesondere nach Eingang eines derartigen Warnsignals die Gesprächsverbindung von extern unterbrechen und / oder sich selbst zwischenschalten und mit mindestens einen der beiden Gesprächspartner kommunizieren.

Im vorliegenden Fall durchläuft ein Gespräch folgende mehrere Konrollinstanzen:
1. Anlegen einer Stimmkonserve, insbesondere einer von innerhalb eines Sicherheitsbereichs nach außerhalb anzurufenden Person;
2. Tatsachenüberprüfung welche Person zu dieser Stimmkonserve gehört, beispielsweise durch einen Vor-Ort Besuch des Aufgenommenen;
3. Überprüfung des Übereinstimmens der Stimmkonserve der außerhalb des Sicherheitsbereichs befindlichen Person.

Dies hat den Vorteil, dass nicht nur der Verbindungsaufbau, sondern auch das weitere Halten einer bereits aufgebauten Verbindung davon abhängig gemacht wird, dass der Teilnehmer verifiziert ist und verifiziert bleibt. So kommt erst gar keine Verbindung zustande, wenn der A-Teilnehmer oder der B-Teilnehmer oder beide nicht authentifiziert sind. Damit ist nicht nur der Verifizierungsakt selbst, sondern der Zeitpunkt des Verifizierungsakts und die Anzahl der Verifizierungsakte Gegenstand der Erfindung, was die Sicherheit weiter erhöht, daß nach einer erfolgten Verifizierung kein Missbrauch von statten geht. So kann nun auch nicht nur beim Verbindungsaufbau, sondern zu einem jedem beliebigen Zeitpunkt, also auch wenn eine Verbindung bereits aufgebaut ist, eine weitere Authentifizierung durchgeführt werden.

Diese weitere Authentifizierung kann entweder abhängig von vordefinierten Zeitintervallen, nach dem Zufallsprinzip, oder anlaßabhängig durchgeführt werden. Eine anlaßabhängige erneute Authentifizierung kann beispielsweise bei einer signifikanten Änderung der Stimme des Teilnehmers veranlasst werden; auch automatisch. Dies hat den Vorteil, dass ein dauerhaftes Mithören des Gesprächs durch Dritte nicht mehr notwendig ist, um sicherzustellen, dass nur zugelassene Verbindungen aufgebaut und gehalten werden.

Hingegen ist ein dauernder Vergleich der Stimme eines Teilnehmers mit einer hinterlegten Stimmkonserve ist zwar denkbar, aber resourcenbindend. Die Überwachung erfolgt in einem solchen Fall permanent anhand der Stimmproben, beispielsweise durch daraus extrahierte Sprachmuster. Während eines dann folgenden Telefongesprächs wird in diesem Fall dann kontinuierlich in Echtzeit die Stimme des A-Teilnehmers (Anrufers) und/ oder B-Teilnehmers (Angerufenen) mit den zugelassenen und/oder gesperrten Stimmproben verglichen. Weicht die aktuelle Stimmprobe von der hinterlegten Stimmprobe um einen vorher definierten Schwellenwert ab, wird im Falle einer derartigen Dauerüberwachung eine geeignete Maßnahme eingeleitet, z.B. Trennung des Gesprächs, Meldung an Personal etc.

Der B-Teilnehmer ist in diesem Fall von der Rufnummer/Anschlusskennung als Identifikationsmerkmal entkoppelt. Der Aufwand für die Pflege von Rufnummerlisten reduziert sich. Auch werden durch diese Entkopplung Rufumleitungen irrelevant.

In beiden Fällen, also wenn die Stimme eines Teilnehmers dauernd verifiziert wird, oder wenn die Stimme eines Teilnehmers anlaßbedingt verifiziert wird, und im Fall, daß die Verifizierung zum Ergebnis kam, daß die Sicherheit nicht zu 100% sichergestellt werden kann, kann die Verbindung zwischen den beiden Gesprächspartnern in dem Kommunikationsnetz durch die automatische Zwischenschaltung eines Gesprächsmaklers weitergeführt werden. Diese Zwischenschaltung des Maklers erfolgt automatisiert und zwangsweise. Der Makler ist eine dritte, am Gespräch sonst nicht beteiligte Person, der die Autorität besitzt, das Gespräch mitzuhören und/oder aufzuzeichnen und die Kommunikation in mindestens eine Richtung zu stören und/oder manuell zu unterbinden; Beispielswiese ist diese dritte Person Mitglied des Aufsichtspersonals einer Haftanstalt..

Eine Ausgestaltungsform dieser Erfindung, umfassend Mittel zum Sicherstellen, dass das Kommunikationsnetz allen Teilnehmern lediglich dann eine Kommunikationsverbindung bereitstellt, wenn alle verifiziert sind, bewirkt, dass nicht nur eine Person, z.B. ein Insasse in einer Justizvollzugsanstalt dieser Authentifizierung unterworfen wird, sondern alle Gesprächspartner, also auch die nicht in einer Justizvollzugsanstalt einsitzenden Personen, was die Sicherheit weiter erhöht, daß wirklich ausschließlich die verifizierten Personen das gesamte Gespräch führen.

Eine Ausgestaltungsform dieser Erfindung, umfassend Mittel zum Unterbrechen einer bereits aufgebauten Kommunikationsverbindung im Kommunikationsnetz für den Fall, daß diese Kommunikationsverbindung durch mindestens eine nicht verifizierte Person genutzt wird, weist den Vorteil auf, dass nach einer fehlgeschlagenen erneuten Authentifizierung eine zuvor aufgebaute Verbindung wieder unterbrochen werden kann.

Eine Ausgestaltungsform dieser Erfindung, umfassend Mittel zur Anzeige einer Unterbrechung einer Kommunikationsverbindung bei einer Überwachungsstelle bringt den Vorteil mit sich, dass eine Überwachungsstelle an einem anderen Ort verortet werden kann, als es mindestens einer der Teilnehmer ist und sie bringt den Vorteil mit sich, dass das Personal der Überwachungsstelle von derartigen Überwachungsaufgaben entlastet werden kann, wenn ein Alarm automatisch ausgelöst wird. Hierdurch wird sichergestellt, dass das Personal nur in solchen Fällen die Teilnehmer einer Kommunikationsverbindung und ihre Kommunikation überprüfen muß, in welchen das erfindungsgemäße Verifizierungssystem eine Auffälligkeit identifiziert. Abhängig von dieser Individualprüfung kann dann das Personal eine möglicherweise zugleich automatisch unterbrochene Leitung wieder in Betrieb setzen und den Gesprächspartnern ein Weitersprechen ermöglichen. In einer weiteren Ausgestaltungsform kann diese Option des Weitersprechens dann nur freigeschalten werden, wenn eine dritte Person das Gespräch persönlich mithört und dieses Mithören im System, beispielsweise durch Eingabe eines Bestätigungscodes, wie z.B. seiner Dienstnummer bestätigt.

Des Weiteren kann die erfindungsgemäße Vorrichtung Mittel zur automatischen Bewertung und/ oder Einordnung von Stimmproben aufweisen. Die Mittel können als Software, Hardware oder einer Kombination daraus realisiert werden.

In einem noch weiteren Ausführungsbeispiel werden gezielt Stimmproben, z.B. des A-Teilnehmers und/oder B-Teilnehmers aufgezeichnet und einer Identität, d.h. einer bestimmten Person zugeordnet und gespeichert. Diese Identität kann beispielsweise durch Sichtkontakt oder durch einen Code bestätigt werden. Dadurch wird sichergestellt, dass der richtige Sprecher aufgezeichnet wird und eine eineindeutige Zuordnung des Sprechers zu der Stimmprobe stattfindet. Da der A-Teilnehmer zusätzlich durch die Stimmprobe identifiziert werden kann, wird eine Weitergabe der Identität erschwert bzw. unterbunden.

Werden zusätzlich Positiv- bzw. Negativlisten zur Beschränkung der Rufnummernkreise verwendet, kann ein möglicher Missbrauch des Systems weiter reduziert werden.

In einem weiteren Ausführungsbeispiel wird jedes zu überwachende Gespräch aufgezeichnet. Bei diesem Verfahren werden automatisch neue Stimmproben erfasst und zusammen mit einer Marke (Timestamp) gespeichert, wenn eine Stimmprobe bei der kontinuierlichen Überwachung von bekannten Stimmproben um einen vorher definierten Schwellenwert abweicht und nicht einwandfrei identifiziert werden kann.

Die derart markierten Stimmproben werden dann zur Nachbearbeitung z.B. an das Sicherheitspersonal übermittelt. Diese markierten Stimmproben können dann manuell z.B. durch das Sicherheitspersonal qualifiziert und der Stimmdatenbank/ Sprachmusterdatenbank als Positiv- oder Negativeintrag zugefügt werden.

Die Vorteile, die sich daraus ergeben, sind die gleichen, die sich auch im vorangegangenen Ausführungsbeispiel ergeben haben: Ferner kann jeder Teilnehmer das System sofort nutzen, da für den reibungslosen Ablauf eine nachträgliche Identifizierung ausreicht.

Die Aufgabe wird weiterhin gelöst durch einen Fernseher, umfassend ein System zur Teilnehmerverifizierung in einem Kommunikationsnetz nach einem der zuvor genannten Ansprüche, wobei das System Mittel zum Erfassen und / oder Speichern von mindestens einer Stimmprobe des ersten Teilnehmers ein Telefons ist

Die Aufgabe wird weiterhin gelöst durch ein Verfahren zur Teilnehmerverifizierung in einem Kommunikationsnetz. Dieses Verfahren kann mindestens einen der folgenden Schritte enthalten: identifizieren eines ersten Teilnehmers, erfassen von mindestens einer Stimmprobe des ersten Teilnehmers, erzeugen eines Sprachmusters des ersten Teilnehmers, verifizieren der Stimmprobe des ersten Teilnehmers, erfassen von mindestens einer Stimmprobe mindestens eines weiteren Teilnehmers, erzeugen mindestes eines Sprachmusters jedes weiteren Teilnehmers, und/oder verifizieren der Stimmproben jedes weiteren Teilnehmers.

Der erste Teilnehmer kann durch ein geeignetes Verfahren wie z. B. Chipkarte, Kontonummer mit/ohne PIN, biometrische Daten wie Fingerabdruck, Irisscan, Voiceprint, Schriftprobe und/oder eine Kombination daraus identifiziert werden.

Nachdem der erste Teilnehmer identifiziert wurde kann dessen Identität über eine textunabhängige Sprecherverifizierung überprüft werden. Dazu wird mindestens eine textunabhängige Stimmprobe dieses Teilnehmers erfasst, aus der anschließend mittels eines geeigneten Algorithmus ein Sprachmuster, d.h. ein Voiceprint, erzeugt wird.

Durch Überprüfen dieses Sprachmusters mit einem hinterlegten, vorher aufgenommenen Sprachmuster, kann die Stimmprobe des ersten Teilnehmers verifiziert werden. Aufgrund der Identifizierung des Teilnehmers und der Überprüfung des Sprachmusters dieses Teilnehmers ist es möglich, den Teilnehmer mit ausreichender Sicherheit zu bestimmen.

Mindestens ein weiterer Teilnehmer kann durch eine textunabhängige Sprecherverifizierung erkannt werden. Dabei wird von dem weiteren Teilnehmer mindestens eine Stimmerobe erfasst, aus der anschließen mittels eines geeigneten Algorithmus ein Sprachmuster erzeugt wird. Dieses Sprachmuster kann anschließend mit den hinterlegten Sprachmustern verglichen werden.

Führt der Vergleich zu einem positiven Ergebnis (d.h. das Sprachmuster bzw. der Sprecher sind bekannt) kann in dem Verfahren eine Reaktion ausgelöst werden. Für den Fall, dass der Vergleich zu einem negativen Ergebnis führt (d.h. das Sprachmuster bzw. der Sprecher sind nicht bekannt), kann in dem Verfahren eine weitere Reaktion ausgelöst werden. Mögliche Reaktionen bzw. Aktionen werden später beschrieben.

In dem erfindungsgemäßen Verfahren ist es möglich, die Stimmproben der Teilnehmer kontinuierlich zu erfassen und mittels der daraus erzeugten Sprachmuster kontinuierlich und in Echtzeit zu verifizieren.

Durch die kontinuierliche Erfassung besteht die Möglichkeit, Weiterveruittlungen und/oder das Weiterreichen des Telefonhörers, d.h. den Wechsel jedes Teilnehmers (A-Teilnehmer und/oder B-Teilnehmer), zu erkennen.

In einer bevorzugten Ausführungsform werden die Stimmproben der Teilnehmer durch einen Vergleich der Sprachmuster mit vorher abgelegten Sprachmustern verifiziert. Durch die Erzeugung eines Sprachmusters aus der Stimmprobe des Teilnehmers ist es möglich diese zu vergleichen und das Datenvolumen zu reduzieren, da das Sprachmuster aus charakteristischen Parametern der Stimme besteht.

Der Vergleich der Sprachmuster kann anhand einer Positiv- bzw. Negativliste erfolgen. In einer Positivliste sind alle erlaubten Verbindungsdaten enthalten. In einer Negativliste hingegen sind alle nicht erlaubten Verbindungsdaten enthalten, d.h. bei Verwendung einer Positivliste sind alle Verbindungen, außer den in der Liste aufgeführten, gesperrt, umgekehrt sind in einer Negativliste alle Verbindungen, außer, den in der Liste aufgeführten erlaubt.

In einer bevorzugten Ausführungsform kann als Reaktion auf das Ergebnis der Verifizierung der Stimmprobe des Teilnehmers mindestens eine weitere Stimmprobe erfasst und bearbeitet. Dadurch ist es möglich, auch nicht bekannte Teilnehmer bereits während des Gesprächs zu erfassen, wodurch das gesamte System trainiert wird.

In einer anderen bevorzugten Ausführungsform kann als Reaktion auf das Ergebnis der Verifizierung der Stimmprobe des Teilnehmers das Verfahren beendet werden. Dadurch ist es möglich, jeden unerwünschten bzw. unerlaubten Kontakt zu unterbinden.

In einer anderen bevorzugten Ausführungsform kann als Reaktion auf das Ergebnis der Verifizierung der Stimmprobe des Teilnehmers eine Verbindung zu einem weiteren Teilnehmer aufgebaut werden. Durch diese zusätzliche Verbindung ist es möglich, während des bestehenden Gesprächs zu entscheiden, ob der Kontakt zugelassen werden soll oder nicht. Ferner kann durch diese zusätzliche Verbindung noch während des Gesprächs eine io Stimmprobe des B-Teilnehmers genommen werden und somit das System weiter trainiert werden.

Als Reaktion auf das Ergebnis der Verifizierung der Stimmprobe des Teilnehmers kann auch jede weitere Aktion ausgeführt werden, mit der sicher gestellt werden kann, dass unerwünschte Kontakte jetzt und in Zukunft zuverlässig unterbunden werden.

Weiterhin ist es möglich, dass die Sprachmuster in Form von Stimm- oder Sprachcharakteristika wie z.B. Vektoren, Frames oder Ähnlichem abgelegt werden.

In einer bevorzugten Ausführungsform kann das Verifizierungsergebnis mit dem aufgezeichneten Gespräch verknüpft werden. Dazu können während des Gesprächs, bei entsprechenden Verifizierungsergebnissen (unbekannt, nicht erlaubt, etc), Zeitmarken gesetzt. Während einer anschließenden Analyse ist es nur noch notwendig die markierten Abschnitte zu überprüfen und zu bewerten.

In einer weiteren bevorzugten Ausführungsform können die nicht bekannten Stimmproben automatisch qualifiziert und abgelegt werden. Dies kann beispielsweise durch die Verwendung einer künstlichen Intelligenz (KI) und/oder eines neuronalen Netzwerks geschehen.

Es ist auch möglich, dass die Teilnehmer Mitglieder einer geschlossenen Benutzergruppe sind. Dadurch kann einerseits das Datenvolumen und andererseits der Aufwand zur Datenpflege weiter reduziert werden.

## Patentansprüche

1. System zur Teilnehmerverifizierung in einem Kommunikationsnetz umfassend:
• Mittel zum Identifizieren eines ersten Teilnehmers,
• Mittel zum Erfassen und / oder Speichern von mindestens einer Stimmprobe des ersten Teilnehmers,
• Mittel zum Erzeugen mindestens eines ersten Sprachmusters des ersten Teilnehmers,
• Mittel zum Erfassen und / oder Speichern von mindestens einer Stimmprobe mindestens eines weiteren Teilnehmers,
• Mittel zum Erzeugen mindestens eines ersten Sprachmusters von einem jeden weiteren Teilnehmer,
• Mittel zum Verifizieren von mindestens einer der Stimmproben durch Vergleichen der erfassten und / oder gespeicherten Stimmproben mit mindestens einem Sprachmuster
wobei all diese Mittel derart zusammenwirken, dass das Kommunikationsnetz mindestens einem der Teilnehmer lediglich dann eine Kommunikationsverbindung bereitstellt, wenn dieser verifiziert ist.

2. System nach Anspruch 1, umfassend Mittel zum Sicherstellen, dass das Kommunikationsnetz allen Teilnehmern lediglich dann eine Kommunikationsverbindung bereitstellt, wenn alle verifiziert sind.

3. System nach Anspruch 1, umfassend Mittel zum Sicherstellen, dass das Kommunikationsnetz allen Teilnehmern lediglich dann eine Kommunikationsverbindung bereitstellt, wenn entweder ein Anrufer, oder wenn mindestens einer der Angerufenen Personen verifiziert ist.

4. System nach einem der zuvor genannten Ansprüche, umfassend Mittel zum Unterbrechen einer bereits bereitgestellten Kommunikationsverbindung im Kommunikationsnetz für den Fall, daß diese Kommunikationsverbindung durch mindestens eine nicht verifizierte Person genutzt wird.

5. System nach einem der zuvor genannten Ansprüche, umfassend Mittel zur Anzeige einer Unterbrechung einer Kommunikationsverbindung bei einer Überwachungsstelle.

6. System nach einem der zuvor genannten Ansprüche, umfassend Mittel zur Wiederinbetriebsetzung einer zuvor unterbrochenen Gesprächsverbindung des Telekommunikationsnetzes unter der Voraussetzung, dass die dann erneut aufgebaute Gesprächsverbindung durch eine dritte Person mitgehört wird.

7. System nach einem der zuvor genannten Ansprüche, umfassend Mittel zur automatischen Bewertung und/oder Einordnung von Stimmproben.

8. Fernseher, umfassend ein System zur Teilnehmerverifizierung in einem Kommunikationsnetz nach einem der zuvor genannten Ansprüche, wobei das System Mittel zum Erfassen und / oder Speichern von mindestens einer Stimmprobe des ersten Teilnehmers ein Telefons ist.

9. Verfahren zur Teilnehmerverifizierung in einem Kommunikationsnetz umfassend die Schritte:
• Verwendung der Mittel zum Identifizieren eines ersten Teilnehmers,
• Verwendung der Mittel zum Erfassen und / oder Speichern von mindestens einer Stimmprobe des ersten Teilnehmers,
• Verwendung der Mittel zum Erzeugen mindestens eines ersten Sprachmusters des ersten Teilnehmers,
• Verwendung der Mittel zum Erfassen und / oder Speichern von mindestens einer Stimmprobe mindestens eines weiteren Teilnehmers,
• Verwendung der Mittel zum Erzeugen mindestens eines ersten Sprachmusters von diesem weiteren Teilnehmer,
• Verwendung der Mittel zum Verifizieren von mindestens einer der Stimmproben durch Vergleichen der erfassten und / oder gespeicherten Stimmproben mit mindestens einem Sprachmuster,
wobei all diese Mittel in dieser aufgeführten Reihenfolge zusammenwirken.

10. Verfahren nach Anspruch 9, wobei die Stimmproben kontinuierlich erfasst und mittels der erzeugten Sprachmuster verifiziert werden.

11. Verfahren nach einem der Ansprüche 9 oder 10, wobei das Verifizieren der Stimmprobe des Teilnehmers durch einen Vergleich der Sprachmuster mit vorher abgelegten Sprachmustern erfolgt.

12. Verfahren nach einem der Ansprüche 9 bis 11, wobei der Vergleich mittels einer Positiv- bzw. Negativliste durchgeführt wird.

13. Verfahren nach einem der Ansprüche 9 bis 12, wobei basierend auf dem Ergebnis der Verifizierung der Stimmprobe des Teilnehmers eine weitere Stimmprobe erfasst und verarbeitet wird.

14. Verfahren nach einem der Ansprüche 9 bis 13, wobei basierend auf dem Ergebnis der Verifizierung der Stimmprobe des Teilnehmers das Verfahren beendet wird.

15. Verfahren nach einem der Ansprüche 9 bis 14, wobei basierend auf dem Ergebnis der Verifizierung der Stimmprobe des Teilnehmers ein weiterer Teilnehmer zugeschaltet wird.

16. Verfahren nach einem der Ansprüche 9 bis 15, wobei die Sprachmuster in Form von Stimm- oder Sprachcharakteristika abgelegt werden.

17. Verfahren nach Anspruch 16, wobei das Verifizierungsergebnis mit einer Zeitmarke versehen wird.

18. Verfahren nach einem der Ansprüche 9 bis 17, wobei die weiteren Stimmproben automatisch qualifiziert und abgelegt werden.
